(19) Europäisches Patentamt
European Patent Office
Office européen des brevets

(11) EP 2 067 819 A1

(12) **EUROPEAN PATENT APPLICATION**
published in accordance with Art. 153(4) EPC

(43) Date of publication:
**10.06.2009 Bulletin 2009/24**

(21) Application number: **07828805.7**

(22) Date of filing: **28.09.2007**

(51) Int Cl.:
***C08L 7/00*** *(2006.01)* ***B60C 1/00*** *(2006.01)*
***B60C 13/00*** *(2006.01)* ***C08K 3/04*** *(2006.01)*
***C08L 9/00*** *(2006.01)*

(86) International application number:
**PCT/JP2007/069064**

(87) International publication number:
**WO 2008/047582 (24.04.2008 Gazette 2008/17)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.09.2006 JP 2006268798**

(71) Applicant: **Bridgestone Corporation**
**Tokyo 104-8340 (JP)**

(72) Inventor: **OOHARA, Masashi**
**Kodaira-shi**
**Tokyo 1878531 (JP)**

(74) Representative: **Whalley, Kevin**
**Marks & Clerk LLP**
**90 Long Acre**
**London WC2E 9RA (GB)**

(54) **RUBBER COMPOSITION FOR SIDE RUBBER AND PNEUMATIC RADIAL TIRE FOR HEAVY LOAD USING THE SAME**

(57) This invention relates to a rubber composition for a side rubber having a good processability and a reduced hysteresis loss and not deteriorating a durability of a side rubber, and more particularly to a rubber composition for a side rubber **characterized by** comprising 35 to 55 parts by mass of a filler at least containing carbon black having a grade of not lower than FEF based on 100 parts by mass of a rubber component composed of at least one of natural rubber and synthetic polyisoprene rubber, and another synthetic diene-based rubber, wherein an amount of the compounded carbon black having a grade of not lower than FEF is 15 to 55 parts by mass, and tan δ at 25°C and a total amount of the filler compounded satisfy a relation of the following formula (I):

$$\tan\delta \;/\; \text{Total amount of filler compounded} \leq 0.0025 \cdots (\mathrm{I}).$$

EP 2 067 819 A1

**Description**

TECHNICAL FIELD

This invention relates to a rubber composition for a side rubber and a heavy duty pneumatic radial tire using the rubber composition in a side rubber, and more particularly to a rubber composition for a side rubber of a heavy duty pneumatic radial tire having a good processability and capable of reducing a rolling resistance throughout the running period without deteriorating a durability of a side portion of a heavy duty pneumatic radial tire.

BACKGROUND ART

Heretofore, in order to reduce a rolling resistance of a radial tire, it is common to make a hysteresis loss of a tread rubber in the tire lowered. However, such an effect becomes small as the tire is worn and thereby the tread rubber is lost. Therefore, an initial rolling resistance of the tire can be reduced by making the hysteresis loss of the tread rubber lowered, but a rolling resistance of the tire in the final stage of running cannot be reduced.

To the contrary, there is heretofore studied making a hysteresis loss of a case member in a radial tire lowered, and in particular it is known that making a hysteresis loss of a side rubber lowered has a beneficial effect on reducing a rolling resistance of a tire (see JP-A-H07-278352, JP-A-H10-195249 and JP-A-H05-051490).

The side rubber is constantly deformed by a rolling input power, that is, a member in a constantly strained region. With respect to the member in the constantly strained region, it is effective to make an elastic modulus and a hysteresis loss lowered in order to reduce the rolling resistance of the tire, and it is commonly effective to decrease a compounding amount of a filler such as carbon black or the like or make a grade of carbon black compounded lowered.

However, when the amount of the filler compounded is decreased or the low grade carbon black is compounded, there is a problem that wear resistance (resistance to wear with a curb) of the side rubber is deteriorated, shrinkage of a rubber during the processing of the tire becomes large to make the property unstable, or the like.

DISCLOSURE OF THE INVENTION

It is, therefore, an object of the invention to solve the above-mentioned problems of the conventional techniques and to provide a rubber composition for a side rubber having a good processability and a reduced hysteresis loss and not deteriorating a durability of a side rubber. Also, it is anther object of the invention to provide a heavy duty pneumatic radial tire using such a rubber composition in a side rubber, in which a rolling resistance is reduced throughout the running period.

The inventor has made various studies in order to achieve the above objects and discovered that a rubber composition, in which a total amount of a filler compounded is within a specified range, a specified amount of carbon black having a grade of not lower than FEF is compounded as the filler and tan δ at 25°C and the total amount of the filler compounded satisfy a specified relation, has a good processability and also has a small hysteresis loss, and a heavy duty pneumatic radial tire using the rubber composition in a side rubber has a sufficient durability in its side and also has a low rolling resistance throughout the running period, and as a result the invention has been accomplished.

That is, the rubber composition for the side rubber according to the invention is characterized by comprising 35 to 55 parts by mass of a filler at least containing carbon black having a grade of not lower than FEF based on 100 parts by mass of a rubber component composed of at least one of natural rubber and synthetic polyisoprene rubber, and another synthetic diene-based rubber,

wherein an amount of the compounded carbon black having a grade of not lower than FEF is 15 to 55 parts by mass, and tan δ at 25°C and a total amount of the filler compounded satisfy a relation of the following formula (I):

$$\tan\delta \,/\, \text{Total amount of filler compounded} \leq 0.0025 \cdots (\mathrm{I}).$$

In this context, the carbon black having a grade of not lower than FEF means carbon black having a dibutyl phthalate (DBP) absorption number of not lower than 105 mL/100g and a nitrogen adsorption specific surface area ($N_2SA$) of not lower than 40 $m^2/g$. Further, the tan δ at 25°C is a value measured at a frequency of 52 Hz and a strain of 2%, and the total amount of the filler compounded is a total parts of the filler compounded based on 100 parts by mass of the rubber component.

In a preferable embodiment of the rubber composition for the side rubber according to the invention, the natural rubber is a modified natural rubber, and 40 to 70% by mass of the rubber component is the modified natural rubber.

In another preferable embodiment of the rubber composition for the side rubber according to the invention, the

synthetic diene-based rubber is a modified synthetic diene-based rubber, and 40 to 70% by mass of the rubber component is the modified synthetic diene-based rubber.

Also, the heavy duty pneumatic radial tire according to the invention is characterized by using the above-described rubber composition for the side rubber in a side rubber.

According to the invention, there can be provided the rubber composition for the side rubber having a good processability and a reduced hysteresis loss and not deteriorating a durability of a side rubber, in which the total amount of the filler compounded is within the specified range, the specified amount of the carbon black having a grade of not lower than FEF is compounded as the filler, and the tan δ at 25°C and the total amount of the filler compounded satisfy the above-described relation of the formula (I). Also, there can be provided the heavy duty pneumatic radial tire using such a rubber composition in the side rubber, in which a rolling resistance is reduced throughout the running period.

BEST MODE FOR CARRYING OUT THE INVENTION

The invention will be described in detail below. The rubber composition for the side rubber according to the invention comprises 35 to 55 parts by mass of a filler at least containing carbon black having a grade of not lower than FEF based on 100 parts by mass of a rubber component composed of at least one of natural rubber and synthetic polyisoprene rubber, and another synthetic diene-based rubber, wherein an amount of the compounded carbon black having a grade of not lower than FEF is 15 to 55 parts by mass, and tan δ at 25°C and a total amount of the filler compounded satisfy a relation of the above-described formula (I).

It is commonly effective to increase the total amount of the filler such as carbon black, silica or the like in order to improve the durability and processability of the side rubber. On the other hand, it is effective to lower the hysteresis loss (tan δ) of the side rubber in order to reduce the rolling resistance. Based on these findings, the inventor has further studied and discovered that it is effective to improve dispersibility of the filler in the rubber component and render the hysteresis loss (tan δ) per total amount of the filler compounded to be not higher than 0.0025, i.e., make tan δ at 25°C and the total amount of the filler compounded satisfy the relation of the formula (I) in order not to deteriorate the processability and wear resistance by lowering the hysteresis loss of the rubber without decreasing the total amount of the filler compounded. When a value of the left part in the formula (I) (tan δ /Total amount of filler compounded) exceeds 0.0025, the hysteresis loss of the side rubber cannot be sufficiently lowered and also the durability and processability of the side rubber cannot be sufficiently maintained.

The rubber component of the rubber composition for the side rubber according to the invention comprises at least one of natural rubber and synthetic polyisoprene rubber, and another synthetic diene-based rubber. In this regard, as the other synthetic diene-based rubber are mentioned polybutadiene rubber (BR), styrene-butadiene copolymer rubber (SBR) and so on. Among them, the polybutadiene rubber is preferable. The synthetic diene-based rubbers may be used alone or in a combination of two or more.

It is effective to use a modified natural rubber as the natural rubber and/or to use a modified synthetic diene-based rubber as the synthetic diene-based rubber in order to improve the dispersibility of the filler in the rubber component and make the tan δ at 25°C of the rubber composition and the total amount of the filler compounded satisfy the relation of the formula (I). When the modified natural rubber is used as the natural rubber, 40 to 70% by mass of the rubber component is preferable to be the modified natural rubber. When the modified synthetic diene-based rubber is used as the synthetic diene-based rubber, 40 to 70% by mass of the rubber component is preferable to be the modified synthetic diene-based rubber. When the content of the modified natural rubber in the rubber component is not less than 40% by mass, the dispersibility of the filler in the rubber component can be sufficiently improved, while when it is not more than 70% by mass, resistance to crack propagation required for the side rubber can be ensured. When the content of the modified synthetic diene-based rubber in the rubber component is not less than 40% by mass, the dispersibility of the filler in the rubber component can be sufficiently improved, while when it is not more than 70% by mass, breaking strength required for the side rubber can be ensured.

For example, the modified natural rubber can be produced by adding a polar group-containing monomer to a natural rubber latex to graft-polymerize the polar group-containing monomer onto a natural rubber molecule in the natural rubber latex, further coagulating and drying it. The natural rubber latex used for producing the modified natural rubber is not particularly limited and can include, for example, a field latex, an ammonia-treated latex, a centrifugally concentrated latex, a deproteinized latex treated with a surfactant or an enzyme, and a combination thereof.

The polar group-containing monomer added to the natural rubber latex has at least one polar group in its molecule and is not particularly limited as long as it can be graft-polymerized with the natural rubber molecule. The polar group-containing monomer is preferable to have a carbon-carbon double bond in its molecule for the graft-polymerization with the natural rubber molecule and is preferably a polar group-containing vinyl-based monomer. As a concrete example of the polar group are preferably mentioned amino group, imino group, nitrile group, ammonium group, imide group, amide group, hydrazo group, azo group, diazo group, hydroxyl group, carboxyl group, carbonyl group, epoxy group, oxycarbonyl group, sulfide group, disulfide group, sulfonyl group, sulfinyl group, thiocarbonyl group, nitrogen-containing

heterocyclic group, oxygen-containing heterocyclic group, alkoxysilyl group, tin-containing group and so on. These polar group-containing monomers may be used alone or in a combination of two or more.

As the amino group-containing monomer are mentioned polymerizable monomers containing in their molecule at least one amino group selected from primary, secondary and tertiary amino groups. Among the polymerizable monomers having the amino group, a tertiary amino group-containing monomer such as dialkylaminoalkyl (metha)acrylate or the like is particularly preferable. These amino group-containing monomers may be used alone or in a combination of two or more. As the primary amino group-containing monomer are mentioned acrylamide, methacrylamide, 4-vinylaniline, aminomethyl (metha)acrylate, aminoethyl (metha)acrylate, aminopropyl (metha)acrylate, aminobutyl (metha) acrylate and so on. As the secondary amino group-containing monomer are mentioned (1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, α-carboxy-β-carboxy-β-phenyl-p-anilinostyrene and the like, (2) anilinophenyl butadienes such as 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, 2-anilinophenyl-3-chloro-1,3-butadiene and the like, and (3) N-monosubstituted (metha)acrylamides such as N-methyl (metha)acrylamide, N-ethyl (metha) acrylamide, N-methylol acrylamide, N-(4-anilinophenyl) methacrylamide and the like. As the tertiary amino group-containing monomer are mentioned N,N-disubstituted aminoalkyl (metha)acrylate, N,N-disubstituted aminoalkyl (metha) acrylamide and so on. As the N,N-disubstituted aminoalkyl (metha)acrylate are mentioned esters of acrylic acid or methacrylic acid such as N,N-dimethylaminomethyl (metha)acrylate, N,N-dimethylaminoethyl (metha)acrylate, N,N-dimethylaminopropyl (metha)acrylate, N,N-dimethylaminobutyl (metha)acrylate, N,N-diethylaminoethyl (metha)acrylate, N,N-diethylaminopropyl (metha)acrylate, N,N-diethylaminobutyl (metha)acrylate, N-methyl-N-ethylaminoethyl (metha) acrylate, N,N-dipropylaminoethyl (metha)acrylate, N,N-dibutylaminoethyl (metha)acrylate, N,N-dibutylaminopropyl (metha)acrylate, N,N-dibutylaminobutyl (metha)acrylate, N,N-dihexylaminoethyl (metha)acrylate, N,N-dioctylaminoethyl (metha)acrylate, acryloyl morpholine and so on. Among them, N,N-dimethylaminoethyl (metha)acrylate, N,N-diethylaminoethyl (metha)acrylate, N,N-dipropylaminoethyl (metha)acrylate, N,N-diocytylaminoethyl (metha)acrylate, N-methyl-N-ethylaminoethyl (metha)acrylate and the like are particularly preferable. Also, as the N,N-disubstituted aminoalkyl (metha)acrylamide are mentioned acrylamide compounds and methacrylamide compounds such as N,N-dimethylaminomethyl (metha)acrylamide, N,N-dimethylaminoethyl (metha)acrylamide, N,N-dimethylaminopropyl (metha)acrylamide, N,N-dimethylaminobutyl (metha)acrylamide, N,N-diethylaminoethyl (metha)acrylamide, N,N-diethylaminopropyl (metha)acrylamide, N,N-diethylaminobutyl (metha)acrylamide, N-methyl-N-ethylaminoethyl (metha)acrylamide, N,N-dipropylaminoethyl (metha)acrylamide, N,N-dibutylaminoethyl (metha)acrylamide, N,N-dibutylaminopropyl (metha)acrylamide, N,N-dibutylaminobutyl (metha)acrylamide, N,N-dihexylaminoethyl (metha)acrylamide, N,N-dihexylaminopropyl (metha)acrylamide, N,N-dioctylaminopropyl (metha)acrylamide and so on. Among them, N,N-dimethylaminopropyl (metha)acrylamide, N,N-diethylaminopropyl (metha)acrylamide, N,N-dioctylaminopropyl (metha)acrylamide and the like are particularly preferable.

As the nitrile group-containing monomer are mentioned (metha)acrylonitrile, vinylidene cyanide and so on. These nitrile group-containing monomers may be used alone or in a combination of two or more.

As the hydroxyl group-containing monomer are mentioned polymerizable monomers having in one molecule at least one hydroxyl group selected from primary, secondary and tertiary hydroxyl groups. As such a monomer are mentioned hydroxyl group-containing unsaturated carboxylic acid-based monomers, hydroxyl group-containing vinyl ether-based monomers, hydroxyl group-containing vinyl ketone-based monomers and the like. As the hydroxyl group-containing monomer are concretely mentioned hydroxyalkyl (metha)acrylates such as 2-hydroxyethyl (metha)acrylate, 2-hydroxypropyl (metha)acrylate, 3-hydroxypropyl (metha)acrylate, 2-hydroxybutyl (metha)acrylate, 3-hydroxybutyl (metha)acrylate, 4-hydroxybutyl (metha)acrylate and the like; mono (metha)acrylates of polyalkylene glycol (the number of alkylene glycol units is, for example, 2-23) such as polyethylene glycol, polypropylene glycol and the like; hydroxyl group-containing unsaturated amides such as N-hydroxymethyl (metha)acrylamide, N-(2-hydroxyethyl) (metha)acrylamide, N,N-bis(2-hydroxymethyl) (metha)acrylamide and the like; hydroxyl group-containing vinylaromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, p-vinylbenzyl alcohol and the like. Among them, the hydroxyl group-containing unsaturated carboxylic acid-based monomers, hydroxyalkyl (metha)acrylates and hydroxyl group-containing vinylaromatic compounds are preferable, and the hydroxyl group-containing unsaturated carboxylic acid-based monomers are particularly preferable. As the hydroxyl group-containing unsaturated carboxylic-based acid monomer are mentioned derivatives such as esters, amides, anhydrides and the like of acrylic acid, methacrylic acid, itaconic acid, fumaric acid, maleic acid and the like. Among them, esters of acrylic acid, methacrylic acid and the like are particularly preferable. These hydroxyl group-containing monomers may be used alone or in a combination of two or more.

As the carboxyl group-containing monomer are mentioned unsaturated carboxylic acids such as (metha)acrylic acid, maleic acid, fumaric acid, itaconic acid, tetraconic acid, cinnamic acid and the like; free carboxyl group-containing

esters such as monoesters of a non-polymerizable polyvalent carboxylic acid such as phthalic acid, succinic acid, adipic acid or the like and a hydroxyl group-containing unsaturated compound such as (metha)allyl alcohol, 2-hydroxyethyl (metha)acrylate or the like, and salts thereof. Among them, the unsaturated carboxylic acids are particularly preferable. These carboxyl group-containing monomers may be used alone or in a combination of two or more.

As the epoxy group-containing monomer are mentioned (metha)allyl glycidyl ether, glycidyl (metha)acrylate, 3,4-oxycyclohexyl (metha)acrylate and so on. These epoxy group-containing monomers may be used alone or in a combination of two or more.

As the nitrogen-containing heterocyclic ring in the monomer containing the nitrogen-containing heterocyclic group are mentioned pyrrole, histidine, imidazole, triazolidine, triazole, triazine, pyridine, pyrimidine, pyrazine, indole, quinoline, purine, phenazine, pteridine, melamine and so on. Moreover, the nitrogen-containing heterocyclic ring may include another heteroatom in its ring. A monomer containing pyridyl group as the nitrogen-containing heterocyclic group includes pyridyl group-containing vinyl compounds such as 2-vinylpyridine, 3-vinylpyridine, 4-vinylpyridine, 5-methyl-2-vinylpyridine, 5-ethyl-2-vinylpyridine and so on. Among them, 2-vinylpyridine, 4-vinylpyridine and the like are particularly preferable. These nitrogen-containing heterocyclic group-containing monomers may be used alone or in a combination of two or more.

As the alkoxysilyl group-containing monomer are mentioned (metha)acryloxymethyl trimethoxysilane, (metha) acryloxymethyl methyl dimethoxysilane, (metha)acryloxymethyl dimethyl methoxysilane, (metha)acryloxymethyl triethoxysilane, (metha)acryloxymethyl methyl diethoxysilane, (metha)acryloxymethyl dimethyl ethoxysilane, (metha)acryloxymethyl tripropoxysilane, (metha)acryloxymethyl methyl dipropoxysilane, (metha)acryloxymethyl dimethyl propoxysilane, γ-(metha)acryloxypropyl trimethoxysilane, γ-(metha)acryloxypropyl methyl dimethoxysilane, γ-(metha)acryloxypropyl dimethyl methoxysilane, γ-(metha)acryloxypropyl triethoxysilane, γ-(metha)acryloxypropyl methyl diethoxysilane, γ-(metha)acryloxypropyl dimethyl ethoxysilane, γ-(metha)acryloxypropyl tripropoxysilane, γ-(metha)acryloxypropyl methyl dipropoxysilane, γ-(metha)acryloxypropyl dimethyl propoxysilane, γ-(metha)acryloxypropyl methyl diphenoxysilane, γ-(metha)acryloxypropyl dimethyl phenoxysilane, γ-(metha)acryloxypropyl methyl dibenzyloxysilane, γ-(metha)acryloxypropyl dimethyl benzyloxysilane, trimethoxy vinylsilane, triethoxy vinylsilane, 6-trimethoxysilyl-1,2-hexene, p-trimethoxysilyl styrene and so on. These alkoxysilyl group-containing monomers may be used alone or in a combination of two or more.

As the monomer having the tin-containing group are mentioned tin-containing monomers such as allyl tri-n-butyl tin, allyl trimethyl tin, allyl triphenyl tin, allyl tri-n-octyl tin, (metha)acryloxy-n-butyl tin, (metha)acryloxy trimethyl tin, (metha)acryloxy triphenyl tin, (metha)acryloxy-n-octyl tin, vinyl tri-n-butyl tin, vinyl trimethyl tin, vinyl triphenyl tin, vinyl tri-n-octyl tin and so on. These tin-containing monomers may be used alone or in a combination of two or more.

The graft polymerization of the polar group-containing monomer onto the natural rubber molecule can be conducted as an emulsion polymerization. In the emulsion polymerization, it is commonly preferable that a solution formed by adding water and if necessary an emulsifying agent to the natural rubber latex is added with the polar group-containing monomer and further added with a polymerization initiator, and stirred at a given temperature to polymerize the polar group-containing monomer. In the addition of the polar group-containing monomer to the natural rubber latex, the emulsifying agent may be previously added to the natural rubber latex, or the polar group-containing monomer may be emulsified with the emulsifying agent and then added to the natural rubber latex. The emulsifying agent usable in the emulsification of the natural rubber latex and/or the polar group-containing monomer is not particularly limited and includes nonionic surfactants such as polyoxyethylene lauryl ether and the like.

The polymerization initiator is not particularly limited and may include various polymerization initiators for the emulsion polymerization, and also the addition method thereof is not particularly limited. As the commonly used polymerization initiator are mentioned benzoyl peroxide, hydrogen peroxide, cumene hydroperoxide, tert-butyl hydroperoxide, di-tert-butyl peroxide, 2,2-azobisisobutyronitrile, 2,2-azobis(2-diaminopropane) hydrochloride, 2,2-azobis(2-diaminopropane) dihydrochloride, 2,2-azobis(2,4-dimethyl-valeronitrile), potassium persulfate, sodium persulfate, ammonium persulfate and so on. Moreover, it is preferable to use a redox type polymerization initiator for lowering the polymerization temperature. As a reducing agent to be combined with a peroxide in the redox type polymerization initiator are mentioned, for example, tetraethylene pentamine, mercaptanes, acidic sodium sulfite, a reducing metal ion, ascorbic acid and so on. As a preferable combination of the peroxide and the reducing agent in the redox type polymerization initiator are mentioned a combination of tert-butyl hydroperoxide and tetraethylene pentamine and so on. In order to improve the low hysteresis loss and the wear resistance of the rubber composition by using the modified natural rubber without deteriorating the processability, it is important to evenly introduce a small amount of the polar group-containing monomer into each of the natural rubber molecules. Therefore, the amount of the polymerization initiator added is preferably within a range of 1-100 mol%, and more preferably 10-100 mol% based on the polar group-containing monomer.

The aforementioned components are charged into a reaction vessel and reacted at 30 to 80°C for 10 minutes to 7 hours to obtain the modified natural rubber latex wherein the polar group-containing monomer is graft-copolymerized onto the natural rubber molecule. Further, the modified natural rubber latex is coagulated and washed, and then dried by using a drying machine such as a vacuum drier, an air drier, a drum drier or the like to obtain the modified natural

rubber. The coagulating agent used for coagulating the modified natural rubber latex is not particularly limited, but includes acids such as formic acid, sulfuric acid and the like, and salts such as sodium chloride and the like.

The content of the polar group in the modified natural rubber is preferably within a range of 0.001 to 0.5 mmol/g, more preferably within a range of 0.002 to 0.3 mmol/g, and even more preferably within a range of 0.003 to 0.2 mmol/g based on the rubber component in the modified natural rubber. When the polar group content in the modified natural rubber is less than 0.001 mmol/g, the low loss factor and the wear resistance of the rubber composition may not be sufficiently improved. While, when the polar group content in the modified natural rubber exceeds 0.5 mmol/g, the physical properties inherent to the natural rubber such as viscoelasticity, S-S characteristic (stress-strain curve in the tensile testing machine) and so on are largely changed to diminish the excellent physical properties inherent to the natural rubber and also the processability of the rubber composition may be largely deteriorated.

The modified synthetic diene-based rubber can be produced through, for example, a method comprising anionically polymerizing monomers and then modifying an active terminal with a modifying agent, a method comprising anionically polymerizing monomers with a polymerization initiator having a functional group, or the like. In this regard, as the usable monomer are mentioned conjugated diene compounds such as 1,3-butadiene, isoprene, 1,3-pentadiene, 2,3-dimethylbutadiene, 2-phenyl-1,3-butadiene, 1,3-hexadiene and so on. The conjugated diene compound may be copolymerized with an aromatic vinyl compound such as styrene or the like, but the modified synthetic diene-based rubber is preferable to be one formed by modifying homopolymer of 1,3-butadiene.

When the polymer having the active terminal is produced through the anionic polymerization, as a polymerization initiator are preferable a hydrocarbyl lithium and a lithium amide compound. Moreover, the amount of the polymerization initiator used is preferably within a range of 0.2 to 20 mmol per 100 g of the monomer. As the hydrocarbyl lithium are mentioned ethyl lithium, n-propyl lithium, isopropyl lithium, n-butyl lithium, sec-butyl lithium, tert-octyl lithium, n-decyl lithium, phenyl lithium, 2-naphthyl lithium, 2-butyl-phenyl lithium, 4-phenyl-butyl lithium, cyclohexyl lithium, cyclopentyl lithium, a reaction product of diisopropenylbenzene and butyl lithium and so on. Also, as the lithium amide compound are mentioned lithium hexamethylene imide, lithium pyrrolidide, lithium piperidide, lithium heptamethylene imide, lithium dodecamethylene imide, lithium dimethyl amide, lithium diethyl amide, lithium dipropyl amide, lithium dibutyl amide, lithium dihexyl amide, lithium diheptyl amide, lithium dioctyl amide, lithium di-2-ethylhexyl amide, lithium didecyl amide, lithium-N-methyl piperazide, lithium ethyl propyl amide, lithium ethyl butyl amide, lithium methyl butyl amide, lithium ethyl benzyl amide, lithium methyl phenethyl amide and so on.

By using a lithium amide compound represented by the formula: Li-AM [wherein AM is a substituted amino group represented by the following formula (II):

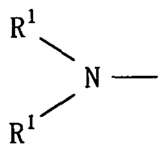

···(II)

(wherein $R^1$ is independently an alkyl group having a carbon number of 1-12, a cycloalkyl group or an aralkyl group) or a cyclic amino group represented by the following formula (III):

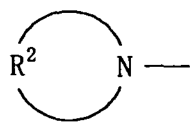

···(III)

(wherein $R^2$ is an alkylene group having 3-16 methylene groups, a substituted alkylene group, an oxyalkylene group or a N-alkylamino-alkylene group)] as the lithium amide compound, the modified synthetic diene-based rubber introduced with at least one nitrogen-containing functional group selected from the group consisting of the substituted amino group represented by the formula (II) and the cyclic amino group represented by the formula (III) can be obtained.

In the formula (II), $R^1$ is an alkyl group having a carbon number of 1-12, a cycloalkyl group or an aralkyl group, and concretely includes methyl group, ethyl group, butyl group, octyl group, cyclohexyl group, 3-phenyl-1-propyl group, isobutyl group and so on. Moreover, $R^1$s may be same or different. In the formula (III), $R^2$ is an alkylene group having 3-16 methylene groups, a substituted alkylene group, an oxyalkylene group or a N-alkylamino-alkylene group. At this moment, the substituted alkylene group includes monosubstituted to octasubstituted alkylene groups. As a substituent are mentioned a linear or branched alkyl group having a carbon number of 1-12, a cycloalkyl group, a bicycloalkyl group,

an aryl group and an aralkyl group. As $R^2$ are concretely preferable trimethylene group, tetramethylene group, hexamethylene group, oxydiethylene group, N-alkylazadiethylene group, dodecamethylene group, hexadecamethylene group and the like.

The lithium amide compound may be previously prepared from a secondary amine and a lithium compound and used for the polymerization reaction, or may be produced in the polymerization system. As the secondary amine are mentioned dimethyl amine, diethyl amine, dibutyl amine, dioctyl amine, dicyclohexyl amine, diisobutyl amine and the like, as well as cyclic amines such as azacycloheptane (i.e., hexamethylene imine), 2-(2-ethylhexyl) pyrrolidine, 3-(2-propyl) pyrrolidine, 3,5-bis(2-ethylhexyl) piperidine, 4-phenyl piperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane and the like. As the lithium compound may be used the above-described hydrocarbyl lithium.

When the active terminal of the polymer having the active terminal is modified with the modifying agent, as the modifying agent may be used a tin-containing compound, a silicon-containing compound, a nitrogen-containing compound or the like. For example, the tin or silicon-containing compound usable as the modifying agent includes a coupling agent represented by the following formula (IV):

$$R^3_aZX_b \qquad (IV)$$

[wherein $R^3$ is independently selected from the group consisting of an alkyl group having a carbon number of 1-20, a cycloalkyl group having a carbon number of 3-20, an aryl group having a carbon number of 6-20 and an aralkyl group having a carbon number of 7-20; Z is tin or silicon; X is independently chlorine or bromine; and a is 0-3 and b is 1-4 provided that a + b = 4]. The synthetic diene-based rubber modified with the coupling agent of the formula (IV) has at least one of tin-carbon bond and silicon-carbon bond. As $R^3$ are concretely mentioned methyl group, ethyl group, n-butyl group, neophyl group, cyclohexyl group, n-octyl group, 2-ethylhexyl group and the like. Moreover, as the coupling agent of the formula (IV) are preferable tin tetrachloride, $R^3SnCl_3$, $R^3_2SnCl_2$, $R^3_3SnCl$ and the like, and tin tetrachloride is particularly preferable.

The nitrogen-containing compound usable as the modifying agent includes N,N'-dimethylimidazolidinone (1,3-dimethyl-2-imidazolidinone), N-methylpyrrolidone, 4-dimethylaminobenzylidene aniline, 4,4'-bis(N,N-dimethylamino) benzophenone, 4,4'-bis(N,N-diethylamino)benzophenone, 4-(N,N-dimethylamino)benzophenone, 4-(N,N-diethylamino) benzophenone, [4-(N,N-dimethylamino)phenyl]methyl ethyl ketone, 4,4'-bis(1-hexamethylene iminomethyl)benzophenone, 4,4'-bis(1-pyrrolidinomethyl)benzophenone, 4-(1-hexamethylene iminomethyl)benzophenone, 4-(1-pyrrolidinomethyl)benzophenone, [4-(1-hexamethylene imino)phenyl]methyl ethyl ketone, and so on.

Also, the silicon-containing compound usable as the modifying agent includes 3-glycidoxypropyl trimethoxysilane, 3-glycidoxypropyl triethoxysilane, N-(1-methylpropylidene)-3-(triethoxysilyl)-1-propaneamine, N-(1,3-dimethylbutylidene)-3-(triethoxysilyl)-1-propaneamine, N-(3-triethoxysilylpropyl)-4,5-dihydroimidazole, 3-methacryloyloxypropyl trimethoxysilane, 3-isocyanatopropyl triethoxysilane, 3-triethoxysilylpropyl succinic anhydride, tetramethoxy silane, tetraethoxy silane, tetra-n-propoxy silane, tetraisopropoxy silane, tetra-n-butoxy silane, tetraisobutoxy silane, tetra-sec-butoxy silane, tetra-tert-butoxy silane, methyltrimethoxy silane, methyltriethoxy silane, methyltripropoxy silane, methyltriisopropoxy silane, ethyltrimethoxy silane, ethyltriethoxy silane, propyltriethoxy silane, butyltrimethoxy silane, phenyltrimethoxy silane, phenyltriethoxy silane, dimethyldimethoxy silane, methylphenyldimethoxy silane, vinyltrimethoxy silane, vinyltriethoxy silane, divinyldimethoxy silane, divinyldiethoxy silane and the like.

The modification reaction with the above modifying agent is preferable to be carried out by a solution reaction. In such a solution may be included the monomer used in the polymerization. Also, the reaction system of the modification reaction is not particularly limited and may be a batch system or a continuous system. Further, the reaction temperature of the modification reaction is not particularly limited as long as the reaction proceeds, and the reaction temperature in the polymerization reaction may be adopted as it is. The amount of the modifying agent used is preferably within a range of 0.25 to 3.0 mol, more preferably 0.5 to 1.5 mol per 1 mol of the polymerization initiator used for producing the polymer.

The filler used in the rubber composition for the side rubber according to the invention is required to at least contain the carbon black having a grade of not lower than FEF, and may consist of the carbon black having a grade of not lower than FEF. As the carbon black having a grade of not lower than FEF are mentioned FEF, HAF, ISAF, SAF grades carbon blacks and so on. Further, as the other filler are mentioned GPF grade carbon black, silica, alumina, aluminum hydroxide, clay, calcium carbonate and so on.

In the rubber composition for the side rubber according to the invention, the total amount of the filler compounded is within a range of 35 to 55 parts by mass based on 100 parts by mass of the rubber component. When the total amount of the filler compounded is less than 35 parts by mass based on 100 parts by mass of the rubber component, the durability

and the processability of the side rubber are deteriorated, while when it exceeds 55 parts by mass, the rolling resistance of the tire cannot be sufficiently reduced.

Further, in the rubber composition for the side rubber according to the invention, the amount of the compounded carbon black having a grade of not lower than FEF is within a range of 15 to 55 parts by mass based on 100 parts by mass of the rubber component. When the amount of the compounded carbon black having a grade of not lower than FEF is less than 15 parts by mass based on 100 parts by mass of the rubber component, the durability of the side rubber may be deteriorated, while when it exceeds 55 parts by mass, the rolling resistance of the tire may not be sufficiently reduced.

Into the rubber composition for the side rubber of the invention can be properly compounded additives usually used in the rubber industry such as a softening agent, an antioxidant, a vulcanizing agent, a vulcanization accelerator, an anti-scorching agent, zinc white, stearic acid, a silane coupling agent and the like in addition to the above rubber component and the filler in accordance with the use purpose. As these additives can be preferably used commercially available ones. The rubber composition for the side rubber of the invention can be produced by compounding the rubber component with the filler at least containing the carbon black having a grade of not lower than FEF, and, if necessary, the properly selected additives and milling, warming, extruding and so on.

The heavy duty pneumatic radial tire according to the invention is characterized by using the above-mentioned rubber composition for the side rubber in a side rubber. In the heavy duty pneumatic radial tire according to the invention, the above-described rubber composition for the side rubber is used, so that the durability of the side portion is high, the rolling resistance is small throughout the running period and the low fuel consumption is excellent. Moreover, as a gas filled into the heavy duty pneumatic radial tire according to the invention can be used usual air or air having a regulated partial oxygen pressure, or inert gases such as nitrogen and so on.

«EXAMPLES»

The following examples are given in illustration of the invention and are not intended as limitations thereof.

<Production example of Modified natural rubber>

(Modifying step of Natural rubber latex)

A field latex is subjected to a centrifugal separation with a latex separator [made by Saito Separator Limited] at a revolution speed of 7500 rpm to obtain a concentrated latex having a dry rubber concentration of 60%. 1000 g of the concentrated latex is charged into a stainless reaction vessel provided with a stirrer and a temperature-regulating jacket, and an emulsion previously formed by adding 10 mL of water and 90 mg of an emulsifying agent [Emulgen 1108, made by Kao Corporation] to 3.0 g of N,N-diethylaminoethyl methacrylate is added together with 990 mL of water, and then stirred for 30 minutes at normal temperature while substituting with nitrogen. Then, 1.2 g of tert-butyl hydroperoxide and 1.2 g of tetraethylene pentamine are added as a polymerization initiator to conduct reaction at 40°C for 30 minutes, whereby a modified natural rubber latex is obtained.

(Coagulating and drying steps)

The modified natural rubber latex is coagulated by adding formic acid to adjust pH to 4.7. The thus obtained solid is treated with a clapper 5 times, crumbed through a shredder and dried by a hot air drier at 110°C for 210 minutes to obtain a modified natural rubber. It is confirmed from a mass of the thus obtained modified natural rubber that the conversion of N,N-diethylaminoethyl methacrylate added as a monomer is 100%. Also, the separation of a homopolymer is tried by extracting the modified natural rubber with a petroleum ether and further extracting with a 2:1 mixed solvent of acetone and methanol, but the homopolymer is not detected from the analysis of the extract, so that it is confirmed that 100% of the monomer added is introduced into the natural rubber molecule. Therefore, the polar group content in the resulting modified natural rubber is 0.027 mmol/g based on the rubber component in the natural rubber latex.

<Production example of Modified polybutadiene rubber>

Into a pressure glass vessel of about 900 mL in capacity dried and purged with nitrogen are charged 283 g of cyclohexane, 50 g of 1,3-butadiene, and a cyclohexane solution of each of 0.0057 mmol of 2,2-ditetrahydrofuryl propane and 0.513 mmol of hexamethylene imine, and 0.57 mmol of n-butyllithium (n-BuLi) is added, which is placed in a warm bath of 50°C provided with a stirrer to conduct polymerization for 4.5 hours. The degree of conversion is approximately 100%. To this polymerization system is added a solution of 0.100 mmol of tin tetrachloride in cyclohexane, which is stirred at 50°C for 30 minutes. Thereafter, 0.5 mL of a solution of 2,6-di-t-butyl-p-cresol (BHT) in isopropanol (BHT

concentration: 5% by mass) is added to stop the polymerization reaction, and further the drying is carried out by the usual manner to obtain a modified polybutadiene rubber. As the vinyl bond (1,2-bond) content of the resulting modified polybutadiene rubber is measured from integral ratios of $^1$H-NMR spectra [Alpha 400 MHz NMR device, made by JEOL Ltd. in $CDCl_3$], the vinyl bond content in the butadiene unit is 14% by mass. Further, as the coupling efficiency of the resulting modified polybutadiene rubber is calculated by using an area ratio of peaks at a high molecular weight side among data obtained through a gel permeation chromatography (GPC), the coupling efficiency is 65%. Furthermore, the resulting modified polybutadiene rubber has a glass transition point of -95°C.

<Preparation of Rubber composition and Tire>

Then, a rubber composition having a formulation as shown in Tables 1-3 is prepared according to a usual method by using the modified natural rubber and modified polybutadiene rubber produced as described above, and hysteresis loss (tan δ), processability and wear resistance of the rubber composition are measured. Further, a heavy duty pneumatic radial tire having a tire size of 11R22.5 is prepared by using the rubber composition in a side rubber, and with respect to the resulting tire, rolling resistance is evaluated according to the following method. Results are shown in Tables 1-3.

(1) Hysteresis loss (tan δ)

With respect to a vulcanized rubber obtained by vulcanizing the rubber composition, the hysteresis loss (tan δ) is measured at a frequency of 52 Hz, a temperature of 25°C and a strain of 2% by using a spectrometer (dynamic viscoelasticity measuring and testing machine) manufactured by Toyo Seiki Corporation.

(2) Processablity (Mill Shrinkage Test)

An uncured rubber is wound on a 3 inch roll having a roll temperature of 70°C at an interval of 2 mm, and the roll is rotated. After the rotation is stopped, the roll is left to stand for 1 minute, and a rubber specimen is cut out at a line of 6 cm. After the rubber specimen is left to stand for 3 minutes, the shrinkage degree of the line of 6 cm is measured and the result is shown by an index on the basis that Comparative Example 1 is 100. The lager the index value, the more excellent the processability.

(3) Wear resistance (PICO wear)

The PICO wear is measured at room temperature according to ASTM-D-2228, and is shown by an index on the basis that Comparative Example 1 is 100. The larger the index value, the more excellent the wear resistance.

(4) Rolling resistance

A resistance in a direction of movement (rolling resistance) generated at a ground-contacting surface of the tire running at 80 km/hour is measured, and is shown by an index on the basis that the rolling resistance of the tire in Comparative Example 1 is 100. The smaller the index value, the smaller and the better the rolling resistance.

Table 1

| | | | Example 1 | Example 2 | Example 3 | Example 4 | Example 5 | Example 6 |
|---|---|---|---|---|---|---|---|---|
| Formulation | Natural rubber | parts by mass | 50 | 50 | 50 | - | 50 | - |
| | Modified natural rubber * 1 | | - | - | - | 50 | - | 50 |
| | Polybutadiene rubber *2 | | - | - | - | - | - | - |
| | Modified polybutadiene rubber *3 | | 50 | 50 | 50 | 50 | 50 | 50 |
| | Carbon black FEF | | 40 | 35 | 20 | 50 | 45 | 55 |
| | Carbon black GPF | | - | - | - | - | - | - |
| | Silica *4 | | - | - | 25 | - | - | - |
| | Silane coupling agent *5 | | - | - | 2 | - | - | - |
| | Stearic acid | | 2 | 2 | 2 | 2 | 2 | 2 |
| | Zinc white | | 3 | 3 | 3 | 3 | 3 | 3 |
| | Vulcanization accelerator *6 | | 1 | 1 | 1 | 1 | 1 | 1 |
| | Sulfur | | 1.5 | 1.5 | 1.5 | 1.5 | 1.5 | 1.5 |
| Properties | tan δ | | 0.097 | 0.085 | 0.082 | 0.093 | 0.105 | 0.113 |
| | tan δ / Total amount of filler compounded | | 0.00243 | 0.00243 | 0.00182 | 0.00186 | 0.00233 | 0.00205 |
| Evaluation | Rolling resistance | index | 97 | 96 | 95 | 96 | 98 | 99 |
| | Processability | | 100 | 100 | 100 | 105 | 100 | 105 |
| | Wear resistance | | 102 | 100 | 100 | 105 | 104 | 108 |

Table 2

| | | | Example 7 | Example 8 | Example 9 | Example 10 | Example 11 | Example 12 |
|---|---|---|---|---|---|---|---|---|
| Formulation | Natural rubber | parts by mass | - | 40 | 40 | - | - | 50 |
| | Modified natural rubber *1 | | 50 | - | - | 50 | 50 | - |
| | Polybutadiene rubber *2 | | 50 | - | - | - | - | - |
| | Modified polybutadiene rubber *3 | | - | 60 | 60 | 50 | 50 | 50 |
| | Carbon black FEF | | 20 | 15 | 30 | 40 | 35 | 50 |
| | Carbon black GPF | | - | - | - | - | - | - |
| | Silica *4 | | 25 | 35 | 15 | - | - | - |
| | Silane coupling agent *5 | | 2 | 3 | 1 | - | - | - |
| | Stearic acid | | 2 | 2 | 2 | 2 | 2 | 2 |
| | Zinc white | | 3 | 3 | 3 | 3 | 3 | 3 |
| | Vulcanization accelerator *6 | | 1 | 1 | 1 | 1 | 1 | 1 |
| | Sulfur | | 1.5 | 1.5 | 1.5 | 1.5 | 1.5 | 1.5 |
| Properties | tan δ | | 0.083 | 0.080 | 0.087 | 0.082 | 0.077 | 0.112 |
| | tan δ / Total amount of filler compounded | | 0.00184 | 0.00160 | 0.00193 | 0.00205 | 0.00220 | 0.00224 |
| Evaluation | Rolling resistance | index | 96 | 95 | 96 | 95 | 94 | 99 |
| | Processability | | 100 | 105 | 100 | 100 | 100 | 105 |
| | Wear resistance | | 100 | 102 | 100 | 102 | 100 | 105 |

Table 3

| | | | Comparative Example 1 | Comparative Example 2 | Comparative Example 3 | Comparative Example 4 | Comparative Example 5 | Comparative Example 6 |
|---|---|---|---|---|---|---|---|---|
| Formulation | Natural rubber | parts by mass | 50 | 50 | 50 | 50 | 50 | 50 |
| | Modified natural rubber * 1 | | - | - | - | - | - | - |
| | Polybutadiene rubber *2 | | 50 | 50 | 50 | 50 | 50 | 50 |
| | Modified polybutadiene rubber *3 | | - | - | - | - | - | - |
| | Carbon black FEF | | 40 | 30 | 15 | - | 45 | 55 |
| | Carbon black GPF | | - | - | - | 40 | - | - |
| | Silica *4 | | - | - | 25 | - | - | - |
| | Silane coupling agent *5 | | - | - | 2 | - | - | - |
| | Stearic acid | | 2 | 2 | 2 | 2 | 2 | 2 |
| | Zinc white | | 3 | 3 | 3 | 3 | 3 | 3 |
| | Vulcanization accelerator *6 | | 1 | 1 | 1 | 1 | 1 | 1 |
| | Sulfur | | 1.5 | 1.5 | 1.5 | 1.5 | 1.5 | 1.5 |
| Properties | tan δ | | 0.115 | 0.101 | 0.105 | 0.078 | 0.124 | 0.145 |
| | tan δ / Total amount of filler compounded | | 0.00288 | 0.00337 | 0.00263 | 0.00195 | 0.00276 | 0.00264 |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| Evaluation | Rolling resistance | index | 100 | 98 | 98 | 96 | 102 | 105 |
| | Processability | | 100 | 95 | 95 | 90 | 100 | 105 |
| | Wear resistance | | 100 | 93 | 95 | 90 | 102 | 104 |

*1 Modified natural rubber obtained through the above-described production example
*2 Japan Synthetic Rubber Co., Ltd., BR01
*3 Modified polybutadiene rubber obtained through the above-described production example
*4 Nippon Silica Industrial Co., Ltd., Nipsil AQ
*5 Degussa Corporation, Si 69
*6 Ouchi Shinko Chemical Industrial Co., Ltd., NOCCELER NS

As seen from Tables 1-3, the rubber compositions in the Examples comprising 15 to 55 parts by mass of the carbon black having a grade of not lower than FEF based on 100 parts by mass of the rubber component and having a value of the tan δ / the total amount of the filler compounded of not higher than 0.0025 maintain the processability and the wear resistance sufficiently as compared with the rubber composition in the Comparative Example 1, and further the tires in the Examples using the rubber composition have a significantly reduced rolling resistance as compared with the tire in the Comparative Example 1.

On the other hand, in the tires of the Comparative Examples 2-3 and 5-6 using the rubber composition having a value of the tan δ /the total amount of the filler compounded of higher than 0.0025, the rolling resistance is not reduced or the processability and the wear resistance are deteriorated as compared with those of the tire in the Comparative Example 1. Also, the rubber composition in the Comparative Example 4 not containing the carbon black having a grade of not lower than FEF has the notably worse processability and wear resistance as compared with the rubber composition in the Comparative Example 1.

## Claims

1. A rubber composition for a side rubber **characterized by** comprising 35 to 55 parts by mass of a filler at least containing carbon black having a grade of not lower than FEF based on 100 parts by mass of a rubber component composed of at least one of natural rubber and synthetic polyisoprene rubber, and another synthetic diene-based rubber,
   wherein an amount of the compounded carbon black having a grade of not lower than FEF is 15 to 55 parts by mass, and
   tan δ at 25°C and a total amount of the filler compounded satisfy a relation of the following formula (I):
   tan δ / Total amount of filler compounded ≤ 0.0025 ... (I).

2. A rubber composition for a side rubber according to claim 1, **characterized in that** the natural rubber is a modified natural rubber, and 40 to 70% by mass of the rubber component is the modified natural rubber.

3. A rubber composition for a side rubber according to claim 1, **characterized in that** the synthetic diene-based rubber is a modified synthetic diene-based rubber, and 40 to 70% by mass of the rubber component is the modified synthetic diene-based rubber.

4. A heavy duty pneumatic radial tire **characterized by** using a rubber composition for a side rubber as claimed in any one of claims 1-3 in a side rubber.

**INTERNATIONAL SEARCH REPORT**

International application No.
PCT/JP2007/069064

A. CLASSIFICATION OF SUBJECT MATTER
*C08L7/00*(2006.01)i, *B60C1/00*(2006.01)i, *B60C13/00*(2006.01)i, *C08K3/04*(2006.01)i, *C08L9/00*(2006.01)i

According to International Patent Classification (IPC) or to both national classification and IPC

B. FIELDS SEARCHED

Minimum documentation searched (classification system followed by classification symbols)
C08L7/00, B60C1/00, B60C13/00, C08K3/04, C08L9/00, C08L15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-183036 A (Bridgestone Corp.), 13 July, 2006 (13.07.06), Claims 1 to 3, 5 to 7; Par. Nos. [0002], [0094], [0096], [0097], [0102] (Family: none) | 1-4<br>2,3 |
| X | JP 2006-152211 A (Bridgestone Corp.), 15 June, 2006 (15.06.06), Claims 1 to 7; Par. Nos. [0113], [0115], [0124], [0126] (Family: none) | 1-4 |
| X | JP 2006-152213 A (Bridgestone Corp.), 15 June, 2006 (15.06.06), Claims 1 to 12; Par. Nos. [0100], [0103], [0105], [0110] (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 October, 2007 (16.10.07) | 30 October, 2007 (30.10.07) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/069064

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2006-151278 A (Bridgestone Corp.), 15 June, 2006 (15.06.06), Claims 1 to 6; Par. Nos. [0041], [0048], [0054], [0058] (Family: none) | 1,2,4<br>3 |
| X<br>Y | JP 2002-097308 A (Bridgestone Corp.), 02 April, 2002 (02.04.02), Claims 1 to 4, 9; Par. Nos. [0023], [0030], [0034], [0037], [0040] (Family: none) | 1,3,4<br>2 |
| X<br>Y | JP 2006-152155 A (Bridgestone Corp.), 15 June, 2006 (15.06.06), Claims 1 to 6; Par. Nos. [0046], [0060] (Family: none) | 1,2,4<br>3 |
| X<br>Y | JP 2006-152215 A (Bridgestone Corp.), 15 June, 2006 (15.06.06), Claims 1 to 5; Par. Nos. [0048], [0057] (Family: none) | 1,2,4<br>3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07278352 A
- JP H10195249 A
- JP H05051490 A